# EUROPÄISCHE PATENTANMELDUNG

(11) **EP 2 061 208 A2**
(43) Veröffentlichungstag der Anmeldung: **20.05.2009**
(21) Anmeldenummer: 08105685.5
(22) Anmeldetag: 29.10.2008
(51) Int. Cl.: H04L 29/06, H04M 1/60, B60R 16/00

(54) **Verfahren und Vorrichtung zum Betreiben eines elektronischen Netzwerks eines Kraftfahrzeugs und Computerprogramm**

(30) Priorität: 02.11.2007 DE 102007052489
(71) Anmelder: Continental Automotive GmbH, 30165 Hannover (DE)
(72) Erfinder: Hain, Ronald, 90522 Oberasbach (DE); Meier, Herbert, 93055 Regensburg (DE); Reussenzehn, Birgit, 97456 Dittelbrunn (DE); Stadler, Franz, 93152 Nittendorf (DE); Stege, Alexander, 85296 Rohrbach (DE)

(57) **Zusammenfassung**

Ein elektronisches Netzwerk eines Kraftfahrzeugs (2) umfasst zumindest eine Ausgabeeinheit, einen zentralrechner (8) und zum Anschließen eines mobilen Geräts zumindest eine Schnittstelle. Zum Betreiben des elektronischen Netzwerks wird nach dem Anschließen des mobilen Geräts an die Schnittstelle eine eindeutige Kennung (ID) des mobilen Geräts ermittelt. Abhängig von der ermittelten eindeutigen Kennung (ID) wird zumindest eine Einstellung (SET) des elektronischen Netzwerks ermittelt und eingestellt.

## Beschreibung

Die Erfindung betrifft ein Verfahren und eine Vorrichtung zum Betreiben eines elektronischen Netzwerks eines Kraftfahrzeugs. Das elektronische Netzwerk umfasst zumindest eine Ausgabeeinheit, einen Zentralrechner und eine Schnittstelle. Die Schnittstelle ist vorgesehen zum Anschließen eines mobilen Geräts. Ferner betrifft die Erfindung ein Computerprogramm mit Programmanweisungen, die bei ihrer Ausführung auf einem Computer das Verfahren zum Betreiben des elektronischen Netzwerks abarbeiten.

Ein elektronisches Netzwerk in einem Kraftfahrzeug kann beispielsweise als Client-Server-Netzwerk oder als Peer-to-Peer-Netzwerk ausgestaltet sein. Das elektronische Netzwerk in dem Kraftfahrzeug umfasst regelmäßig einen fest eingebauten Rechner, beispielsweise einen Bordcomputer, der auch als Zentralrechner bezeichnet werden kann. Ferner umfasst das elektronische Netzwerk mindestens eine bevorzugt mehrere Ausgabeeinheiten, beispielsweise einen oder mehrere Bildschirme, die im Front- oder Fondbereich des Kraftfahrzeugs angeordnet sind. Ferner umfasst das elektronische Netzwerk zumindest eine Eingabeeinheit und/oder eine Schnittstelle, beispielsweise eine USB-Schnittstelle oder eine Bluetooth-Schnittstelle, über die ein mobiles Gerät, beispielsweise ein MP3-Player anschließbar ist. Audio- und/oder Videodateien, die auf dem MP3-Player abgespeichert sind können dann über die Ausgabeeinheiten des elektronischen Netzwerks in dem Kraftfahrzeug ausgegeben werden.

Die Aufgabe, die der Erfindung zugrunde liegt, ist, ein Verfahren und eine Vorrichtung zum Betreiben eines elektronischen Netzwerks in einem Kraftfahrzeug und ein Computerprogramm zu schaffen, die ein komfortables Nutzen des elektronischen Netzwerks in Verbindung mit einem mobilen Gerät ermöglichen.

Die Aufgabe wird gelöst durch die Merkmale der unabhängigen Ansprüche. Vorteilhafte Ausgestaltungen sind in den Unteransprüchen angegeben.

Die Erfindung zeichnet sich aus gemäß eines ersten Aspekts der Erfindung durch ein Verfahren und eine Vorrichtung zum Betreiben eines elektronischen Netzwerks eines Kraftfahrzeugs. Das elektronische Netzwerk umfasst zumindest eine Ausgabeeinheit, einen Zentralrechner und zum Anschließen eines mobilen Geräts zumindest eine Schnittstelle. Nach dem Anschließen des mobilen Geräts an die Schnittstelle wird eine eindeutige Kennung des mobilen Geräts ermittelt. Abhängig von der ermittelten eindeutigen Kennung wird zumindest eine Einstellung des elektronischen Netzwerks ermittelt und eingestellt.

Dies ermöglicht, das mobile Gerät, falls das mobile Gerät früher schon einmal an das elektronische Netzwerk angeschlossen war, wieder zu erkennen und gegebenenfalls automatisch zumindest eine Einstellung vorzunehmen, die beim letzten Verwenden des mobilen Geräts in Zusammenhang mit dem elektronischen Netzwerk eingestellt war. Dies ermöglicht eine besonders komfortable Nutzung des elektronischen Netzwerks in Verbindung mit dem mobilen Gerät. Das mobile Gerät umfasst vorzugsweise eine Speichereinheit, auf der Daten abgespeichert sind, die vorzugsweise über die Ausgabeeinheit ausgebbar sind. Das mobile Gerät umfasst beispielsweise einen mobilen Datenträger, beispielsweise einen USB-Stick und/oder eine Speicherkarte, und/oder einen tragbaren Mediaplayer, beispielsweise einen DVD-Player und/oder einen MP3-Player, und/oder einen tragbaren Computer, beispielsweise ein Laptop. Die Schnittstelle kann eine Kabel-Verbindung des mobilen Geräts mit dem elektronischen Netzwerk unterstützen oder eine kabellose Kommunikation zwischen dem elektronischen Netzwerk und dem mobilen Gerät ermöglichen. Nach dem Anschließen des mobilen Geräts an die Schnittstelle wird die eindeutige Kennung des mobilen Geräts vorzugsweise automatisch von dem elektronischen Netzwerk ermittelt, beispielsweise kann eine Speichervorrichtungs-ID des mobilen Geräts automatisch ausgelesen werden.

In einer vorteilhaften Ausgestaltung wird abhängig von der ermittelten eindeutigen Kennung die Einstellung ermittelt, die eingestellt war, als das mobile Gerät das letzte Mal an der Schnittstelle angeschlossen war. Dies trägt besonders vorteilhaft zu dem komfortablen Nutzen des elektronischen Netzwerks in Verbindung mit dem mobilen Gerät bei, da ein Nutzer des mobilen Geräts jedes Mal automatisch die Einstellung erhält, die er beim letzten Benutzen des mobilen Geräts in Verbindung mit dem elektronischen Netzwerk eingestellt hatte.

In einer weiteren vorteilhaften Ausgestaltung wird abhängig von der ermittelten eindeutigen Kennung zumindest ein Profil ermittelt, das die Einstellung umfasst. Zumindest das eine Profil wird einem Nutzer über die Ausgabeeinheit zur Auswahl vorgeschlagen. Abhängig von der Auswahl des Nutzers wird das Profil ausgewählt. Abhängig von dem ausgewählten Profil wird die Einstellung eingestellt. Dies kann zu einer noch komfortableren Nutzung des elektronischen Netzwerks in Verbindung mit dem mobilen Gerät beitragen, da beispielsweise das Profil mehrere Einstellungen umfassen kann und/oder da mit einem mobilen Gerät mehrere Profile in Verbindung gebracht werden können, so dass unterschiedliche Nutzer desselben mobilen Geräts nach dem Anschließen des mobilen Geräts an eine der Schnittstellen ihr eigenes Profil auswählen können. Vorzugsweise kann das Profil von dem Nutzer des mobilen Geräts selbst angelegt, gelöscht und/oder modifiziert werden. Ferner kann jedes beliebige Profil vorzugsweise von einem Administrator angelegt, gelöscht und/oder bearbeitet werden.

In einer vorteilhaften Ausgestaltung wird das Profil nur dann dem Nutzer vorgeschlagen oder dem Nutzer nur dann die Auswahl des Profils ermöglicht, wenn der Nutzer sich auf vorgegebene Weise eingibt. Dies ermöglicht, dass ein vorgegebenes Profil nicht von einem unautorisierten Nutzer verwendet werden kann. Dass der Nutzer sich auf vorgegebene Weise eingibt, bedeutet in diesem Zusammenhang, dass der Nutzer beispielsweise einen Authentifizierungscode, beispielsweise ein Kennwort eingibt.

In einer weiteren vorteilhaften Ausgestaltung umfasst die Einstellung des elektronischen Netzwerks eine Ausgabeeinstellung der Ausgabeeinheit. Dies trägt besonders wirkungsvoll zu der komfortablen Nutzung des elektronischen Netzwerks bei. Beispielsweise kann beim Anschließen eines Videoplayers automatisch ein vorgegebener Kontrast, eine vorgegebene Helligkeit und/oder eine vorgegebene Farbeinstellung eingestellt werden. Ferner kann beim Abspielen einer Audiodatei beispielsweise eine vorgegebene Equalizer-Einstellung und/oder eine vorgegebene Lautstärke automatisch eingestellt werden.

In einer weiteren vorteilhaften Ausgestaltung umfasst die Einstellung des elektronischen Netzwerks ein Zugriffsrecht auf einen Datensatz, der auf einem Speichermedium des elektronischen Netzwerks gespeichert ist. Dies trägt noch weiter zur komfortablen Nutzung des elektronischen Netzwerks bei, da beispielsweise vorgegebene Datensätze von einem Nutzer mit einem Lese- und/oder Schreibschutz versehen werden können und diese dann nicht von einem anderen Nutzer gelesen beziehungsweise geändert werden können. Beispielsweise kann ein erwachsener Fahrer auf einer Festplatte des Zentralrechners nicht jugendfreie Dateien ablegen und diese mit einem Leseschutz versehen und muss so keine Sorge haben, dass sich beispielsweise ein jugendlicher Mitfahrer, beispielsweise auf einem Rücksitz des Kraftfahrzeugs, diese nicht jugendfreien Dateien ausgeben lässt.

In einer weiteren vorteilhaften Ausgestaltung umfasst die Einstellung des elektronischen Netzwerks ein Zugriffsrecht auf das Speichermedium des elektronischen Netzwerks. Dies ermöglicht einfach, das ganze Speichermedium vor unautorisiertem Zugriff zu schützen. Das Speichermedium umfasst beispielsweise die Festplatte und/oder ein anderes Laufwerk des Zentralrechners und/oder eine beliebige Speichereinheit des elektronischen Netzwerks und/oder eines daran angeschlossenen mobilen Geräts.

Die Erfindung zeichnet sich aus gemäß eines zweiten Aspekts der Erfindung durch ein Computerprogramm, das Programmanweisungen umfasst, die bei ihrer Ausführung auf einem Computer das Verfahren zum Betreiben des elektronischen Netzwerks abarbeiten. Das Computerprogramm ist beispielsweise auf dem Speichermedium des Zentralrechners abgespeichert und kann von diesem ausgeführt werden.

In einer vorteilhaften Ausgestaltung sind die Programmanweisungen des Computerprogramms auf einem computer-lesbaren Speichermedium abgespeichert. Das computer-lesbare Speichermedium kann beispielsweise ein mobiler Datenträger sein. Dies ermöglicht, das Computerprogramm im Sinne eines Updates auf das elektronische Netzwerk aufzuspielen, beispielsweise auf die Festplatte des Zentralrechners.

Ausführungsbeispiele sind im Folgenden anhand von schematischen Zeichnungen näher erläutert.

### Es zeigen:

- Figur 1: ein Kraftfahrzeug mit einem elektronischen Netzwerk,
- Figur 2: ein Ablaufdiagramm eines Computerprogramms zum Betreiben des elektronischen Netzwerks.

Elemente gleicher Konstruktion oder Funktion sind figuren-übergreifend mit den gleichen Bezugszeichen gekennzeichnet.

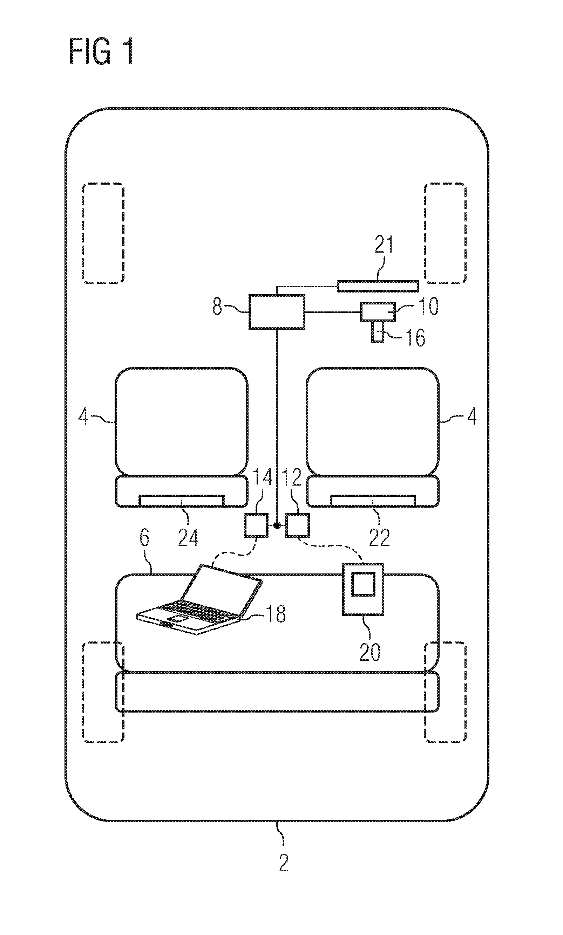

Ein Kraftfahrzeug 2 (Figur 1) weist einen Innenraum mit zwei Vordersitzen 4 und mehreren Rücksitzen 6 auf. Alternativ dazu kann das Kraftfahrzeug eine beliebige Anzahl von Sitzen aufweisen. Ferner umfasst das Kraftfahrzeug 2 ein elektronisches Netzwerk, das vorzugsweise einen Zentralrechner 8, zumindest eine erste Schnittstelle 10, vorzugsweise weitere Schnittstellen, beispielsweise eine zweite Schnittstelle 12 und/oder eine dritte Schnittstelle 14, und zumindest eine erste Ausgabeeinheit 21, vorzugsweise mehrere Ausgabeeinheiten aufweist, beispielsweise eine zweite Ausgabeeinheit 22 und/oder eine dritte Ausgabeeinheit 24.

Das elektronische Netzwerk kann als Client-Server-Netzwerk ausgebildet sein. In diesem Zusammenhang kann beispielsweise der Zentralrechner 8 als Server ausgebildet sein. Alternativ dazu kann das elektronische Netzwerk als Peer-to-Peer-Netzwerk ausgebildet sein. In diesem Zusammenhang hat der Zentralrechner 8 keine Sonderstellung unter anderen Rechnern, die sich in dem elektronischen Netzwerk befinden oder an das elektronische Netzwerk angeschlossen sind.

Die erste Schnittstelle 10 ist beispielsweise im Bereich des Beifahrers vorgesehen. Die zweite und die dritte Schnittstelle 12, 13 sind beispielsweise im Fondbereich des Kraftfahrzeugs 2 vorgesehen. Es kann aber auch jede beliebige Anzahl von Schnittstellen vorgesehen sein und die Schnittstellen können jeweils an jeder beliebigen Stelle im Innenraum des Kraftfahrzeugs 2 angeordnet sein. Die Schnittstellen sind beispielsweise kabelgebundene Schnittstellen, beispielsweise USB-Schnittstellen, oder kabellose Schnittstellen, beispielsweise Bluetooth und/oder WLAN-Schnittstellen. Die Schnittstellen sind vorgesehen zum Anschließen mobiler Geräte. Die mobilen Geräte umfassen beispielsweise ein tragbares Speichermedium 16, beispielsweise einen Memory-Stick oder eine Speicherkarte, einen tragbaren Computer 18 und/oder einen tragbaren Mediaplayer 20. Der tragbare Mediaplayer 20 kann beispielsweise einen MP3-Player und/oder einen Videoplayer umfassen. Ist eines der mobilen Geräte an eine der Schnittstellen angeschlossen, so ist es ein Bestandteil des elektronischen Netzwerks.

Die erste Ausgabeeinheit 21 ist beispielsweise im Sichtbereich des Beifahrers angeordnet, die zweite Ausgabeeinheit 22 ist beispielsweise hinter dem Beifahrer im Sichtbereich eines Fondpassagiers angeordnet und/oder die dritte Ausgabeeinheit 24 ist beispielsweise hinter dem Fahrer im Sichtbereich eines weiteren Fondpassagiers angeordnet. Es kann aber auch jede beliebige Anzahl von Ausgabeeinheiten vorgesehen sein und die Ausgabeeinheiten können jeweils an jeder beliebigen Stelle im Innenraum des Kraftfahrzeugs 2 angeordnet sein.

Dateien, die auf den mobilen Geräten gespeichert sind, können über die entsprechenden Schnittstellen ausgelesen werden und auf zumindest einer vorzugsweise mehreren Ausgabeeinheiten ausgegeben werden.

Mobile Geräte werden regelmäßig von denselben Personen genutzt. Beispielsweise haben mehrere Kinder einer einzigen Familie jeweils einen eigenen MP3-Player. Ferner werden die mobilen Geräte regelmäßig von derselben Personengruppe genutzt. Beispielsweise kann der tragbare Computer 18 innerhalb derselben Familie von unterschiedlichen Familienmitgliedern genutzt werden.

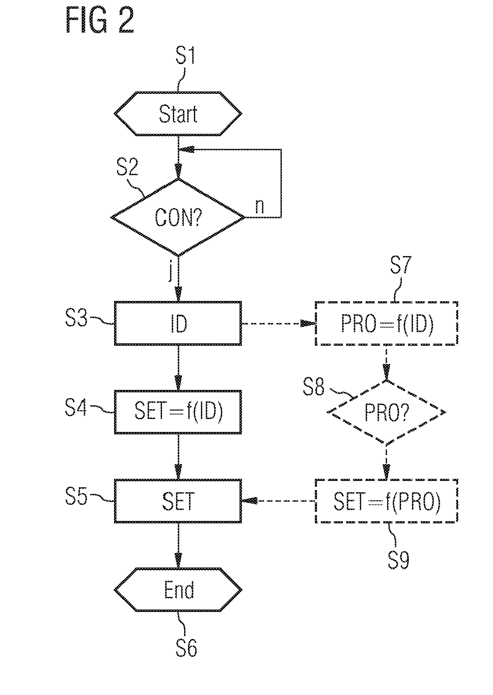

Auf einem Speichermedium, beispielsweise des Zentralrechners 8, ist vorzugsweise ein Computerprogramm zum Betreiben des elektronischen Netzwerks abgespeichert (Figur 2). Das Computerprogramm dient dazu, eine besonders komfortable Nutzung des elektronischen Netzwerks in Verbindung mit zumindest einem der mobilen Geräte zu ermöglichen. Insbesondere dient das Computerprogramm dazu, nach dem Anschließen des entsprechenden mobilen Geräts an eine der Schnittstellen des elektronischen Netzwerks automatisch eine eindeutige Kennung ID des mobilen Geräts zu ermitteln und abhängig von der ermittelten eindeutigen Kennung ID des mobilen Geräts ein Einstellung SET des elektronischen Netzwerks vorzunehmen.

Das Computerprogramm wird vorzugsweise in einem Schritt S1 gestartet, in dem gegebenenfalls Variablen initialisiert werden, beispielsweise beim Einschalten des Zentralrechners 8.

In einem Schritt S2 wird mittels einer Anschlussprüfung CON überprüft, ob zumindest eines der mobilen Geräte an eine der Schnittstellen angeschlossen ist. Ist die Bedingung des Schritts S2 nicht erfüllt, so wird der Schritt S2 vorzugsweise nach einer vorgegebenen Zeitdauer erneut abgearbeitet. Ist die Bedingung des Schritts S2 erfüllt, so wird die Bearbeitung vorzugsweise in einem Schritt S3 fortgesetzt.

In dem Schritt S3 wird die eindeutige Kennung ID des mobilen Geräts vorzugsweise automatisch ermittelt. Dazu wird beispielsweise eine Signatur des mobilen Geräts, beispielsweise einer Speichervorrichtung des mobilen Geräts automatisch von dem Zentralrechner 8 ausgelesen.

In einem Schritt S4 wird abhängig von der ermittelten eindeutigen Kennung ID zumindest die Einstellung SET ermittelt. Die Einstellung SET ist beispielsweise die Einstellung SET, die zu dem Zeitpunkt eingestellt war, als das mobile Gerät das letzte Mal von dem elektronischen Netzwerk insbesondere von der entsprechenden Schnittstelle entfernt wurde. Die Einstellung SET kann beispielsweise eine Ausgabeeinstellung einer der Ausgabeeinheiten umfassen, beispielsweise eine Bildeinstellung, wie zum Beispiel eine Kontrasteinstellung, eine Farbeinstellung, und/oder eine Helligkeitseinstellung und/oder eine Toneinstellung, wie zum Beispiel eine Lautstärkeeinstellung. Alternativ oder zusätzlich kann die Einstellung SET ein oder mehrere Zugriffsrechte umfassen, die für einzelne Datensätze und/oder ganze Speichermedien des elektronischen Netzwerks und/oder daran angeschlossener mobiler Geräte vorgegeben werden können. Beispielsweise kann die Einstellung SET einen Lese- und/oder Schreibschutz und/oder eine Lese- und/oder Schreibberechtigung für einen oder mehrere Datensätze und/oder für ein oder mehrere Speichermedien des elektronischen Netzwerks umfassen.

In einem Schritt S5 wird die ermittelte Einstellung SET eingestellt.

In einem Schritt S6 kann das Computerprogramm beendet werden. Vorzugsweise wird das Computerprogramm jedoch regelmäßig während des Betriebs des elektronischen Netzwerks, insbesondere des Zentralrechners 8 abgearbeitet.

Alternativ zu dem Schritt S4 können die Schritte S7 bis S9 abgearbeitet werden.

In dem Schritt S7 wird abhängig von der eindeutigen Kennung ID ein Profil PRO ermittelt. Das Profil PRO umfasst beispielsweise mehrere Einstellungen SET. Ferner können zu jeder eindeutigen Kennung ID mehrere Profile PRO abgespeichert sein. Dies trägt zu der besonders komfortablen Nutzung des elektronischen Netzwerks bei, wenn beispielsweise der tragbare Computer 18 von mehreren Personen genutzt wird, die unterschiedliche Einstellungen SET bevorzugen. Falls mehrere Profile zu der eindeutigen Kennung ID gefunden werden, können diese Profile PRO beispielsweise über eine der Ausgabeeinheiten dem entsprechenden Nutzer vorgeschlagen werden. Dieser kann dann zumindest eines der Profile PRO auswählen.

Die Sicherheit der Nutzung des elektronischen Netzwerks mittels des mobilen Geräts kann zusätzlich erhöht werden, wenn das Anzeigen mehrerer Profile PRO und/oder die Profile PRO selbst durch ein Kennwort und/oder eine andere Kennung geschützt sind, das der entsprechende Nutzer zum Verwenden des entsprechenden Profils PRO eingeben muss. Die Profile PRO können von den Nutzern selbst erstellt, gelöscht und/oder bearbeitet werden. Ferner ist vorzugsweise vorgesehen, dass mittels einer Administrator-Kennung Zugriff auf die Profile PRO erfolgen kann und so die entsprechenden Profile PRO von einem Administrator angelegt, gelöscht und/oder bearbeitet werden können. Beispielsweise kann ein erwachsener Fahrer des Fahrzeugs jugendfreie und nicht jugendfreie Daten auf einem der Speichermedien des elektronischen Netzwerks ablegen und Profile PRO für jugendliche Mitfahrer einrichten, denen dann Einstellungen SET zugeordnet sind, die Zugriffsrechte enthalten und beispielsweise den Zugriff auf die jugendfreien Dateien ermöglichen und auf die nicht jugendfreien Dateien Sperren.

In einem Schritt S8 kann gegebenenfalls das Profil PRO ausgewählt werden.

In einem Schritt S9 werden automatisch abhängig von dem ausgewählten Profil PRO die Einstellungen SET vorgenommen, die dem Profil PRO zugeordnet sind.

Die Erfindung ist nicht auf die angegebenen Ausführungsbeispiele beschränkt. Beispielsweise kann das elektronische Netzwerk mit einem stationären Netzwerk kommunizieren, beispielsweise dem Internet. In diesem Zusammenhang kann die Einstellung SET eine Interneteinstellung umfassen, beispielsweise eine Startseite und/oder ein Zugriffsrecht oder eine Sperrung für eine oder mehrere vorgegebene Internetseiten.

## Patentansprüche

1. Verfahren zum Betreiben eines elektronischen Netzwerks eines Kraftfahrzeugs (2), das zumindest eine Ausgabeeinheit, einen Zentralrechner (8) und zum Anschließen eines mobilen Geräts zumindest eine Schnittstelle umfasst, bei dem
- nach dem Anschließen des mobilen Geräts an die Schnittstelle eine eindeutige Kennung (ID) des mobilen Geräts ermittelt wird,
- abhängig von der ermittelten eindeutigen Kennung (ID) zumindest eine Einstellung (SET) des elektronischen Netzwerks ermittelt und eingestellt wird.

2. Verfahren nach Anspruch 1, bei dem abhängig von der ermittelten eindeutigen Kennung (ID) die Einstellung (SET) ermittelt wird, die eingestellt war, als das mobile Gerät das letzte mal an der Schnittstelle angeschlossen war.

3. Verfahren nach einem der vorstehenden Ansprüche, bei dem
- abhängig von der ermittelten eindeutigen Kennung (ID) zumindest ein Profil (PRO) ermittelt wird, das die Einstellung (SET) umfasst,
- zumindest das eine Profil (SET) einem Nutzer über die Ausgabeeinheit zur Auswahl vorgeschlagen wird,
- abhängig von der Auswahl des Nutzers das Profil (PRO) ausgewählt wird,
- abhängig von dem ausgewählten Profil (PRO) die Einstellung (SET) eingestellt wird.

4. Verfahren nach Anspruch 3, bei dem das Profil (PRO) nur dann dem Nutzer vorgeschlagen wird oder dem Nutzer nur dann die Auswahl des Profils (PRO) ermöglicht wird, wenn der Nutzer sich auf vorgegebene Weise eingibt.

5. Verfahren nach einem der vorstehenden Ansprüche, bei dem die Einstellung (SET) des elektronischen Netzwerks eine Ausgabe-Einstellung der Ausgabeeinheit umfasst.

6. Verfahren nach einem der vorstehenden Ansprüche, bei dem die Einstellung (SET) des elektronischen Netzwerks ein Zugriffsrecht auf einen Datensatz umfasst, der auf einem Speichermedium des elektronischen Netzwerks gespeichert ist.

7. Verfahren nach Anspruch 6, bei dem die Einstellung (SET) des elektronischen Netzwerks ein Zugriffsrecht auf das Speichermedium des elektronischen Netzwerks umfasst.

8. Vorrichtung zum Betreiben eines elektronischen Netzwerks eines Kraftfahrzeugs (2), das zumindest eine Ausgabeeinheit, einen Zentralrechner (8) und zum Anschließen eines mobilen Geräts zumindest eine Schnittstelle umfasst, wobei die Vorrichtung dazu ausgebildet ist
- nach dem Anschließen des mobilen Geräts an die Schnittstelle eine eindeutige Kennung (ID) des mobilen Geräts zu ermitteln,
- abhängig von der ermittelten eindeutigen Kennung (ID) zumindest eine Einstellung (SET) des elektronischen Netzwerks zu ermitteln und einzustellen.

9. Computerprogramm mit Programmanweisungen, die bei ihrer Ausführung auf einem Computer das Verfahren gemäß einem der Ansprüche 1 bis 7 abarbeiten.

10. Computerprogramm nach Anspruch 9, dessen Programmanweisungen auf einem computer-lesbaren Speichermedium abgespeichert sind.
